# EUROPEAN PATENT APPLICATION

(11) **EP 4 559 962 A1**
(43) Date of publication of application: **28.05.2025**
(21) Application number: 23211794.5
(22) Date of filing: 23.11.2023
(51) Int. Cl.: C08K 5/103, C08L 91/00, C08L 23/16, C08L 53/02

(54) **GREEN PROCESSING OILS FOR ELASTOMER COMPOUNDING**

(71) Applicant: Oleotecnica S.p.A., 20123 Milano MI (IT)
(72) Inventor: VIRTUANI, Alessandro, Milano (MI) (IT); VIRTUANI, Marco, Milano (MI) (IT)
(74) Representative: Gislon, Gabriele

(57) **Abstract**

The present invention relates to the field of process additives to be used within the elastomer compounding process. In particular, concerns the use of saturated polyol esters compounds, alone or in admixture with a mineral oil component, as an ingredient for production and extension of elastomeric polymers in order to improve their workability and the characteristics of the finished products.

## Description

### FIELD OF INVENTION

The present invention refers to the field of elastomer compounding, as production of polymers, production and processing of natural and synthetic rubbers, production of plastics and resins, including adhesives and in particular to compounds to be used as processing oils, alone or in admixture with small percentages of refined mineral oil components, and which are a more environmentally friendly additive with respect to the state of the art.

### STATE OF THE ART

It is common practice in the processing of production of polymers, production and processing of natural and synthetic rubbers, production of plastics and resins, including adhesives, to use mineral oils during the compounding stage. These oils, also called "processing" oils, have different functions in the production and extension process; they mainly act as plasticizers and they are employed during rubber mixing to improve the production and enhance the final product performance. Their presence increases the chain mobility causing an increasing in deformability and flexibility of the rubber, thus avoiding undesired effects on mechanical properties of the final product. Furthermore, when used in significant amount, such oils "extend" the volume of the final product, reducing overall costs.

Known and commonly used processing oils are mineral oils, obtained from refined petroleum derivatives; according to their chemical composition they can be categorized as naphthenic, paraffinic, and aromatic.

In the case of other elastomeric products, such as, for examples, gaskets, sliding belts, flexible pipes and tubes, and also more sophisticated applications, like the one employed in the pharmaceutical/health care field, different rubbers may be used such as *i.e.* EPDM, EPR, SEBS, SBS, SBC, PVC, NBR, BR, IR, SBR.

The most commonly used processing oils for these types of rubbers are paraffinic and naphthenic severely-refined mineral oils. In the case of these mineral oils, the classification as a carcinogen is not necessary if it can be shown that the substance contains less than 3% extract of DMSO according to the IP 346 measurement "Determination of the aromatic polycyclics in unused lubricating base oils and petroleum fractions without asphaltene - extraction of dimethyl sulfoxide", Institute of Petroleum, London. This kind of oils are also known as "refined oils" and are less harmful for humans with respect to other compounds, but they are still highly detrimental from an environmental point of view.

A great effort is being made in order to find more environmentally friendly alternatives to the known processing oils, facing the challenge of identifying compounds suitable to work as extender oils in rubber compounding and to maintain the final product characteristics of the same rubber when extended with mineral oils.

Some attempts are being made, for example, to replace at least part of mineral oils with oils of natural origin, in particular vegetable oils such as soybean oil, palm oil, castor oil, linseeds oil, derivatives of vegetable carboxylic acids and polyols, and similar oils.

ITMI20102325 describes an elastomer composition comprising, as extender oil, vegetable oil derivatives selected from specific triglycerides or ester of polyols, to be used, in particular, in the fields of tires production with natural or synthetic rubbers, such as the StyreneButadiene rubber.

EP3995539 describes new mixtures to be used as processing oils in elastomer compositions, comprising refined mineral oil components and ester components, in a ratio by weight of mineral oil/ester between 95:5 to 30:70 respectively.

The teachings suggested by the prior art, seems to led to the conclusion that, to fully replace the known and extensively used mineral oil with a vegetable oil in the compounding process of natural and synthetic elastomers, appears difficult to bring in to reality. In fact, it is presently not possible, yet, to achieve in the final extended elastomer the same technical performances obtained using the conventional mineral processing oils, both in terms of process conditions and product features.

There is therefore the need for new options and alternative products and/or compositions to be used as substitutes of the currently employed processing mineral oils for elastomer compounding which are more sustainable from an environmental point of view, but also able to give the same or very similar performances of the conventional ones and with a sustainable balance between costs and advantages.

In particular it is still needed to provide effective compounds/mixtures of processing oils for elastomer production and extension in the field of elastomers such as Ethylene/Propylene Rubbers, like Ethylene/Propylene Copolymers (EPR), Ethylene/Propylene/Diene Monomer (EPDM), Styrene/Ethylene/Butadiene/ Styrene (SEBS), Styrene/Butadiene/Styrene (SBS), and others Saturated Styrenic Block Copolymer (SBC), Polyvinyl Chloride (PVC), Nitrile Rubber (NBR), Polybutadiene (BR), Polyisoprene (IR), Styrene-Butadiene (SBR), etcetera.

Furthermore, the use of those more environmentally friendly process oils can be directed not only to synthetic and natural rubber compounding but also to production of polymers, production and processing of natural and synthetic rubbers, production of plastics and resins, including adhesives, and their vast possibility of application in different fields, including the technologically demanding food field and the health care industries, also including the use in formulation with transparent, white or light-coloured polymers.

### OBJECTS OF THE INVENTION

It is an aim of the present invention to provide compounds to be used as processing oils, alone or in admixture with small percentages of refined mineral oil components, for the production of polymers, production and processing of natural and synthetic rubbers and elastomers, production of plastics and resins, including adhesives, which are more environmentally friendly with respect to the mineral oils commonly used today and which are fully compatible with the previously mentioned polymers/elastomers during and after processing.

Another aim of the invention is to provide a process for production of elastomers including compounding elastomers with a processing oil.

A further aim of the invention is to provide an elastomer composition comprising a reduced amount of mineral processing oil.

The above aims are reached by a processing oil according to claim 1, the use of a polyol polyester according to claim 11, a process of production of elastomers according to claim 13 and an elastomer composition according to claim 17.

These specific aims, together with other objects, will be presented in detail in the following paragraphs where the present invention is further described.

### DESCRIPTION OF THE INVENTION

The present invention relates to the field of process additives to be used within the elastomer compounding process.

In particular, the present application concerns the use of at least one saturated polyol esters compounds, alone or in admixture with a mineral oil component (herein also referred to as "mineral oil"), as an ingredient for production, extension and compounding of elastomeric polymers in order to improve their workability and the characteristics of the finished products.

In the present document, the expression "processing oil" makes reference to oils for production and/or extension of polymers, the oils being used as plasticizers or, more generally, as additional components to be mixed/compounded with the elastomer, aimed to improve the overall process and/or the features of the final product, possibly reducing the costs and/or the consumed energy.

The term "elastomer" or "rubber" are herein considered synonyms and indicates a polymer which presents viscoelasticity (i.e., both viscosity and elasticity) and weak intermolecular forces, which permit the polymers to stretch in response to macroscopic stresses.

In one aspect of the present invention, preferred rubber polymers are EPDM, EPR, SBS, SEBS, SBC, PVC, NBR, BR, IR, SBR.

The wording "refined mineral oil" it is intended to refer to a refined product obtained from petroleum distillation and/or other refining processes. The refined product purity grade requirement will depend on the final application of the extended elastomer; for example, technical items for medical or food contact and drinking water applications may require oils with parameters specified by main pharmacopeias (EUP, USP, etcetera) or FDA.

According to the present invention, the "saturated polyol esters" compounds (herein also referred to as "esters"), are compounds derived from the coupling of a linear or branched C₂-C₆ polyalcohol, with at least a saturated, linear or branched, C₄-C₂₀ monocarboxylic acid.

According to one aspect, at least one saturated polyol ester of the present invention can be used as processing oil alone or in admixture with at least a mineral oil in a reduced percentage, i.e., below 30% p/p with respect to the total weight of the processing oil mixture, being the value 30% p/p not included, preferably below 25% p/p, more preferably below 10% p/p.

In a preferred aspect, the saturated polyol ester is the only processing oil.

In another aspect, at least a saturated polyol ester is in admixture with a refined mineral oil in a ratio by weight of ester:mineral oil ranging from 99:1 to 70:30 respectively, being the value 70:30 of ester: mineral oil not included. Preferably the saturated polyol ester is in admixture with a refined mineral oil in a ratio by weight of ester: mineral oil ranging from 99:1 to 75:25 respectively.

In preferred embodiments the weight/weight ratio between the ester component and the refined mineral oil component may be 100:0, 99:1, 98:2, 97:3, 96:4, 95:5, 94:6, 93:7, 92:8, 91:9, 90:10, 89:11, 88:12, 87:13, 86:14, 85:15, 84:16, 83:17, 82:18, 81:19, 80:20, 79:21, 78:22, 77:23, 76:24, 75:25, 74:26, 73:27, 72:28 or 71:29.

According to a preferred embodiment, the mineral oils include at least one of:
- petroleum distillates, such as: hydrotreated heavy paraffinic; solvent-dewaxed or refined heavy paraffinic; hydrotreated heavy naphthenic; hydrotreated middle; hydrotreated light paraffinic; hydrotreated light naphthenic; solvent-dewaxed or refined light paraffinic;
- residual oils form petroleum, such as hydrotreated and solvent refined;
- petroleum residues solvent-dewaxed;
- lubricating oils from petroleum;
- white mineral oil from petroleum;
- hydrocarbons C₁₈-C₂₄ iso-alkanes containing less than 2% (by weight) of aromatics (<2% aromatics).

Suitable mineral oils are commercially available and can be identified by different CAS numbers such as, for example, the ones in the following list: Distillates (petroleum), hydrotreated heavy paraffinic CAS: 64742-54-7; Distillates (petroleum), solvent-dewaxed heavy paraffinic CAS: 64742-65-0; Distillates (petroleum), hydrotreated heavy naphthenic CAS: 64742-52-5; Distillates (petroleum), hydrotreated middle CAS: 64742-46-7; Distillates (petroleum), hydrotreated light naphthenic CAS: 64742-53-6; Distillates (petroleum), solvent-dewaxed light paraffinic CAS: 64742-56-9; Distillates (petroleum), solvent-refined light paraffinic CAS: 64741-89-5; Distillates (petroleum), hydrotreated light paraffinic CAS: 64742-55-8; Residual oils (petroleum), hydrotreated CAS 64742-57-0; Residual oils (petroleum), solvent refined CAS : 64742-01-4; Residues (petroleum), solvent dewaxed CAS 64742-62-7; Lubricating oils (petroleum), C24-50, solvent-extd., dewaxed, hydrogenated CAS: 101316-72-7; Lubricating oils (petroleum), C>25, solvent-extracted, deasphalted, dewaxed, hydrogenated CAS: 101316-69-2; White mineral oil (petroleum) CAS 8042-47-5; Hydrocarbons C18-C24 iso-alkanes <2% aromatics EC 940-734-7.

As previously indicated, the term "saturated polyol ester compound", or "ester" for short, indicates a group of products derived by the synthetic (or enzymatic) coupling of an alcohol with a carboxylic acid or a derivative thereof such an anhydride, an acyl halide and the like. The esters used in this invention are not detrimental to the environment; they are readily biodegradable according to OECD 301B Method and they have a significant percentage of renewability. Suitable ester substances may be rapidly degraded by microorganisms in both the aquatic and terrestrial environments. In the case of admixtures, the ester component represents the environmentally friendly component of the mixtures of the invention.

The ester substances used in the invention comprise a portion deriving from an alcohol and a portion derived from an acid. The ester is obtainable from the reaction of at least one alcohol, selected from linear or branched polyols C₂-C₆, with at least one acid, selected from linear or branched, monocarboxylic C₄-C₂₀ acids, preferably C₈-C₂₀ acids, or derivatives of said acid suitable to react with the selected alcohol. Suitable acid derivatives are acid anhydrides.

According to a preferred aspect of the invention, the ester compounds of the invention are apolar.

According to a preferred embodiment, the alcohols used to obtain ester components include linear or branched polyols C₂-C₆.

Particularly preferred alcohols include: neopentylglycol (CAS 126-30-7); trimethylolpropane (CAS 77-99-6) and pentaerythrityl alcohol (CAS 115-77-5). Even more preferred is pentaerythrityl alcohol.

Preferred acids are saturated linear or branched, monocarboxylic C₄-C₂₀ acids. Preferred carboxylic acids are selected from alkyl and non-aromatic cyclic carboxylic acids.

According to an embodiment, said carboxylic acids include: caprylic acid; pelargonic acid; capric acid; caprylic/capric acid (mixture of C₈-C₁₀ fatty acids); lauric acid; palmitic acid; stearic acid and isostearic acid. A preferred acid is isostearic acid.

As previously stated, the ester compound comprised in the invention can preferably derive from the coupling of one of the listed alcohols with one of the listed acids or derivatives thereof to provide an ester having the selected alcohol portion and acid portion. Said coupling is well known to the skilled in the art. Any other suitable chemical reaction may be anyway carried out, provided that it results in the ester component as herein disclosed.

According to an embodiment, the ester of the invention is selected from the following list, where also CAS identification numbers are reported: Heptanoic acid, ester with 2,2-dimethyl-1,3-propanediol CAS 68855-18-5; 2,2-dimethyl-1,3-propanediyl dioctanoate CAS 31335-74-7; 1,3-Propoanediol, 2,2-dimethyl-, C5-9 carboxylates CAS 85711-80-4; Decanoic acid, mixed esters with neopentyl glycol and octanoic acid CAS 70693-32-2; Fatty acids, C12-16, esters with neopentyl glycol CAS 85186-95-4; Fatty acids, coco, 2,2-dimethyl-1,3-propanediyl esters CAS 91031-85-5; Fatty acids, C6-18, 2,2-dimethyl-1,3-propanediyl esters CAS 91031-27-5; 2,2-dimethyl-1,3-propanediyl dioleate CAS 42222-50-4; 9-Octadecenoic acid (Z)-, ester with 2,2-dimethyl-1,3-propanediol CAS 67989-24-6; 2-ethyl-2-[[(1-oxoheptyl)oxy]methyl]propane-1,3-diyl bisheptanoate CAS 78-16-0; Fatty acids, C6-18, triesters with trimethylolpropane CAS 91050-88-3; Fatty acids, C8-10, mixed esters with neopentyl glycol and trimethylolpropane CAS 97281-24-8; Fatty acids, C7-8, triesters with trimethylolpropane CAS 189120-64-7; Decanoic Fatty acids, 8-10 (even numbered), di- and triesters with propylidynetrimethanol CAS 11138-60-6; Fatty acids, C8-10, triesters with trimethylolpropane CAS 91050-89-4; Fatty acids, C16-18, triesters with trimethylolpropane CAS 91050-90-7; 2-ethyl-2-(((1-oxoisooctadecyl) oxy)methyl)-1,3-propanediyl bis (isoocta decanoate) CAS 68541-50-4; 2,2-bis[[(1-oxopentyl)oxy]methyl] propane-1,3-diyl divalerate CAS 15834-04-5; Fatty acids, C16-18 (even numbered), esters with pentaerythritol CAS 85116-93-4; Fatty acids, C5-9 tetraesters with pentaerythritol CAS 67762-53-2; Reaction mass of Heptanoic acid 3-pentanoyloxy-2,2-bis-pentanoyloxymethyl-propyl ester, Heptanoic acid 2-heptanoyloxymethyl-3-pentanoyloxy-2-pentanoyloxymethyl-propyl ester and Heptanoic acid 3-heptanoyloxy-2-heptanoyloxymethyl-2-pentanoyloxymethyl-propyl ester (CAS Formerly 68441-94-1); Tetraesters from esterification of pentaerythritol with pentanoic, heptanoic and isononanoic acids (CAS Formerly 68424-30-6); Pentaerythritol ester of pentanoic acids and isononanoic acid CAS 146289-36-3; Pentaerythritol tetraesters of n-decanoic, n-heptanoic, n-octanoic and n-valeric acids CAS 68424-31-7; Tetra-esterification products of C5, C7, C8, C10 fatty acids with pentraerythritol CAS 68424-31-7; Fatty acids, C7, C8, C10 and 2-ethylhexanoic acid, tetraesters with pentaerythritol CAS 68424-31-7; Decanoic acid, mixed esters with heptanoic acid, octanoic acid, pentaerythritol and valeric acid CAS 71010-76-9; Decanoic acid, mixed esters with octanoic acid and pentaerythritol CAS 68441-68-9; Fatty acids, C8-10, tetraesters with pentaerythritol CAS 85586-24-9; Fatty acids, C16-18, tetraesters with pentaerythritol CAS 91050-82-7; 2,2-bis[[(1-oxoisooctadecyl)oxy]methyl]-1,3-propanediyl bis (isooctadecanoate) CAS 62125-22-8; Fatty acids, lanolin, esters with pentaerythritol CAS 68440-09-5; Fatty acids, C5-9, mixed esters with dipentaerythritol and pentaerythritol CAS 85536-35-2; Fatty acids, C8-10 mixed esters with dipenaterythritol, isooctanoic acid, pentaerythritol and tripentaerythritol CAS 189200-42-8; 2-ethylhexyl palmitate CAS 29806-73-3; Phenol, dodecyl-, branched, sulfurized 96152-43-1; Fatty acids, C8-10, mixed esters with adipic acid and trimethylolpropane CAS 95912-89-3.

The above inventory is a non-limiting list of saturated polyol ester oils that can be used according to the present invention; any compound, known by the expert in the field having similar structures and characteristics is to be intended included in the scope of protection of the present application.

Preferred ester oils are the compounds identified with CAS 62125-22-8, pentaerythrityl tetraisostearate (PTIS, also known as isooctadecanoic acid tetraester with pentaerythritol or 2,2-bis[[(1-oxoisooctadecyl)oxy]methyl]-1,3-propanediyl bis(isooctadecanoate)) and CAS 91050-89-4, Fatty acids, C8-10, triesters with trimethylolpropane (TMP C8C10).

The processing oil of the invention is constituted by at least one saturated polyol ester component in admixture with at least one refined mineral oil derived from petroleum, as previously listed, in a reduced percentage, i.e., below 30% p/p with respect to the total weight of the processing oil mixture, being the value 30% p/p not included, preferably below 25% p/p, more preferably below 10% p/p.

The ester component is a more environmentally friendly molecule or substance with respect to the commonly used processing oils, and in particular to the refined mineral oil.

In a preferred aspect, the at least one saturated polyol ester is in admixture with a refined mineral oil in a ratio by weight of ester: mineral oil ranging from 99:1 to 70:30 respectively, being excluded the value 70:30 of ester:mineral oil, and preferably ranging from 99:1 to 75:25 respectively.

In the preferred embodiments the weight/weight ratio between the ester component and the refined mineral oil component may be 99:1, 98:2, 97:3, 96:4, 95:5, 94:6, 93:7, 92:8, 91:9, 90:10, 89:11, 88:12, 87:13, 86:14, 85:15, 84:16, 83:17, 82:18, 81:19, 80:20, 79:21, 78:22, 77:23, 76:24, 75:25, 74:26, 73:27, 72:28 or 71:29.

Preferred saturated polyol esters to be used are selected from the previously mentioned PTIS (CAS: 62125-22-8), TMP C8C10 (CAS: 91050-89-4) or mixtures thereof. Preferred mixtures according to the invention are:
a mixture (A) of PTIS (CAS: 62125-22-8) with hydrotreated heavy paraffinic (CAS: 64742-54-7) in a ratio by weight from 95:5 to 80:20, particularly 90:10 to 80:20 (ester:mineral oil);
a mixture (B) of PTIS (CAS: 62125-22-8) with white mineral oil from petroleum (CAS: 8042-47-5) in a ratio by weight from 95:5 to 80:20, particularly 90:10 to 80:20 (ester:mineral oil);
a mixture (C); of TMPC8C10 (CAS: 91050-89-4) with hydrotreated heavy paraffinic (CAS: 64742-54-7) in a ratio by weight from 95:5 to 80:20, particularly 90:10 to 80:20 (ester:mineral oil).

According to a preferred embodiment, the processing oil of the invention has the following physico-chemical characteristics:
colour: uncoloured/slightly yellow
viscosity at 40°C: 20<mm²/s<160
density at 15°C: >0.830 kg/L, preferably < 0.990 kg/L
flash point PM: >200°C, preferably >250°C
pour point: <-6°C, preferably <-12°C

Those characteristics are measured, for example, by following the relevant ASTM methods that are reported in the Experimental Section.

The values of the viscosity range are related to the fact that this characteristic defines the type of polymer the ingredient and/or the extender oil has to be used with, the use for which the extended elastomer is employed and the final product to be made. Rubber items such as gaskets and sliding belts are normally produced by using for example EPDM/EPR and oils with a viscosity at 40°C around 90-160 mm²/s; in the production of technical apparatus in the pharmaceutical/health care field (*e.g.* drinking water tubes, rubber caps) the commonly used white oils to be mixed with suitable elastomers are provided with a viscosity at 40°C of about 70-75 mm²/s; for production of the technical items that typically needs extension oils with a viscosity at 40°C around 20.5-25 mm²/s which allows a good workability with polymers like SBS and the like (*i.e.* shoe soles, indirect food contact items).

In case of the employment of a mixture, the additive of the invention to be used as processing oil, can include more than one ester substances and/or more than one refined mineral oil.

The ester compound or the mixture of the invention can be used as production and extender oil in polymer compounding processes, particularly with elastomers. The term "extended elastomer" or "extended rubber" herein indicates the elastomer or polymer mixed with the extender/processing oils. The term "final product" is herein used to indicate the final item produced using the extended elastomer or polymer. The advantages of the new processing oil ester compounds and/or mixtures of the invention are related to their ability to perform as the currently used oils based only on refined mineral oils, in particular in terms of compatibility with the rubber/elastomer polymer. The ester compound and/or the mixture of the invention, in fact, is well incorporated into the polymer, preventing a migration of the oil to the surface of the final product. Said polymer can be also pre-mixed with conventional extender oils. The production process of elastomer presents Mooney viscosity comparable to traditional ones, as well as flexibility values of obtained elastomers. The final products are stable in time, showing good performances in terms of UV, heat and thermo-oxidative ageing.

Thanks to its uncoloured/slightly yellow colour, the ester compound and/or the mixture of the invention, provides a lightly coloured to uncoloured additive, free from unpleasant smell; for this reason, said ester compound and/or mixture can advantageously be used also in the food and healthcare industries together with white/transparent elastomers.

As far as the handling hazard is concerned, the ester compounds and/or the mixtures of the invention are safe thanks to their high flash point (preferably > 200°C as measured by Pensky Martens method) and their low volatility, with low impact on work environment, thus enhancing the workability of the final product. Lastly, the processing additive of the invention is also suitable in the case it is required to disperse solid additives into the rubber compound (e.g. Carbon black).

The quantity of processing additive (the ester component, alone or in admixture with mineral oil) to be used in the elastomer compounding process will depend on the type of polymer used, the process to be performed, the product to be made, the technology and plant used, etcetera. In general, the amount of the additive to be used in a certain polymer is substantially the same as the amount of mineral oil that is known to be used for that polymer and final product. The skilled in the art of elastomer compounding is therefore able to establish the correct amount of the processing additive of the present invention to be used following the common manufacturing practices, also taking into account the starting polymer composition that can be pure rubber or, in some cases, an already extended elastomer. By way of example, in the literature, values around 20-50% weight/weight on the total mixture are suitable amounts of processing oil to be used, especially for EPDM rubbers.

As mentioned, the use of a completely biodegradable component as the only extension oil in the compounding process of natural and synthetic rubbers, was considered not able to allow the achievement of the same technical performances obtained using only the conventional mineral processing oils.

The following experimental section will demonstrate that the selected saturated polyol esters of the present invention are surprisingly able to achieve the above-mentioned result, alone or in admixture with a small amount (e.g., 10% p/p, 20% p/p with respect to the total weight of the processing oil mixture) of the commonly used mineral oils. Moreover, another advantage of the processing oils according to the present invention, is related to the fact that they can be used in the same amount as the commonly used mineral oils (alone or in processing oils comprising mineral oils), without any need for the elastomer compounding process to be recalibrated in terms of processed quantity. In other words, the amount of mineral processing oil used in a presently known formulation may be replaced by the same amount of a processing oil according to the invention, without the need of changing the formulation or the processing parameters. The use of the saturated polyol esters of the invention, alone or in admixture with the mineral oils, represent an excellent technical, environmental and economic advantage with respect to the prior art. Using the additive of the invention for the production of polymers, production and processing of natural and synthetic rubbers, production of plastics and resins, including adhesives, it allows to have a biodegradable component in a final product, maintaining technical performance and durability, with a good balance between the cost increase and the environment gain.

Nowadays, plastics are produced in huge amount in EU (62 Mln tons/years in EU in 2018 - *Plastic Europe Data*) and the consumption of mineral oils involved in the aforementioned uses counts millions of tons per year in Europe alone. Being able to limit their use by replacing them, entirely or in part, with a biodegradable compound in final products would represent a significant saving of CO₂ emissions into the environment and a lower demand of fossil oils.

A processing oil for elastomer compounding according to claim 1, comprising at least a saturated polyol ester compound and at least one refined mineral oil component, the ratio ester/mineral oil (weight/weight) being within a range of 100:0 to 70:30, the values 100:0 and 70:30 being excluded, is an object of the invention.

The use of at least one saturated polyol esters of the invention, alone or in admixture with refined mineral oils, as processing/extender oil in elastomer compounding processes according to claim 11, is a further object of the invention.

The ester compound and/or the mixture of the invention can be added either to non-extended elastomers (dry rubbers) or to already extended elastomers, provided that in the final amount of the mixture components the ratio of ester:refined mineral oil is at least 70:30 and preferably in the range from 95:5 to 80:20 respectively.

According to another of its aspects, the invention relates to a process for extending at least an elastomer, which comprises the addition of a saturated polyol esters of the invention, alone or in admixture with refined mineral oils, to at least one elastomer, according to claim 13. The process involves the presence of the at least one saturated polyol esters of the invention, alone or in admixture with refined mineral oils, as the extension oil additive.

An item produced starting from a composition of an elastomer extended/plasticized with the saturated polyol esters of the invention, alone or in admixture with refined mineral oils, is another object of the present invention.

An elastomer extended with at least a saturated polyol ester of the invention, alone or in admixture with refined mineral oils, according to claim 17 is another object of the present invention.

The invention will be further disclosed with reference to the following non-limiting examples.

### EXPERIMENTAL SECTION

### Characterization of processing oils according to the invention

Processing oils according to the invention, i.e., saturated polyol esters PTIS (CAS 62125-22-8) and TMP C8C10 (CAS 91050-89-4) alone or in admixture with commonly employed mineral oils, were prepared and characterized as reported in Table 1 and Table 2 respectively.

The tests were performed following the ASTM methods, specific test codes are reported in the related column.

The mineral oils chosen for the mixtures with the saturated polyol esters are distillates (petroleum), hydrotreated heavy paraffinic (CAS 64742-54-7) and white mineral oil (petroleum) (CAS 8042-47-5). The latter was used in two different grades, i.e., technical and pharmaceutical grades, which differs in terms of purity. In particular, the Pharmaceutical grade white mineral oil is commercially available and manufactured to exceed the purity requirements of the EU and US Pharmacopoeias and can be used in a variety of food-related, cosmetic and pharmaceutical applications.

**Table 1: processing oil according to the invention**

| **Component** | **CAS** | **M-1** | **M-2** | **M-3** | **M-4** | **M-5** | **M-6** | **M-7** | **M-8** | **M-9** | **M-10** |
|---|---|---|---|---|---|---|---|---|---|---|---|
| PTIS | 62125-22-8 | 80% | 90% | 100% | 80% | 90% | 80% | 90% | - | - | - |
| TMP C8C10 | 91050-89-4 | - | - | - | - | - | | | 80% | 90% | 100% |
| Distillates (petroleum), hydrotreated heavy paraffinic | 64742-54-7 | 20% | 10% | - | - | - | | | 20% | 10% | - |
| White mineral oil (petroleum) Technical grade | 8042-47-5 | - | - | - | 20% | 10% | - | - | - | - | - |
| White mineral oil (petroleum) Pharmaceutical grade | 8042-47-5 | - | - | - | - | - | 20% | 10% | - | - | - |

**Table 2: physico-chemical characterization**

| **Characteristic** | **ASTM method** | **M-1** | **M-2** | **M-3** | **M-4** | **M-5** | **M-6** | **M-7** | **M-8** | **M-9** | **M-10** |
|---|---|---|---|---|---|---|---|---|---|---|---|
| Color | D1500 | L 1,0 | L 0,5 | L 0,5 | | | | | L 0,5 | L 0,5 | |
| Color Saybolt | D156 | | | | + 17 | + 13 | + 17 | + 13 | | | + 25 |
| Density at 15°C (g/mL) | D4052 | 0,9163 | 0,9203 | 0,9240 | 0,9111 | 0,9174 | 0,9122 | 0,9181 | 0,9333 | 0,9398 | 0,9465 |
| Viscosity at 40°C (mm²/s) | D445 | 143 | 145,4 | 147,9 | 130,7 | 135,3 | 121,4 | 130,1 | 27,72 | 23,46 | 19,94 |
| Viscosity at 100°C (mm²/s) | D445 | 17,04 | 17,59 | 18,14 | 16,15 | 16,65 | 15,24 | 16,18 | 5,30 | 4,82 | 4,46 |
| Viscosity Index | D2270 | 129 | 133 | 137 | 131 | 132 | 130 | 132 | 126 | 130 | 139 |
| Pour point (°C) | D97 | -24 | -24 | -21 | -27 | -27 | -30 | -30 | -33 | -48 | -68 |
| Flash point Cleveland open cup (°C) | D92 | 296 | 288 | 280 | 282 | 287 | 285 | 290 | 255 | 252 | 250 |

Mixtures from M-1 to M-3 and from M-8 to M-10 were used as processing oils for EPR/EPDM, mixtures from M-4 to M-7 were used as processing oils with EPR/EPDM, SBS, SEBS.

As comparative examples, the following processing oils were prepared and tested:
- **M-11** (100% Distillates (petroleum), hydrotreated heavy paraffinic, CAS: 64742-54-7)
- **M-12** (52% Fatty acids, coco, adipic, triesters with trimethylolpropane; 48% Fatty acids, C18-unsatd., diesters and triesters with trimethylolpropane).

Neither M-11 nor M-12 contains a saturated polyols ester according to the invention.
M-11 was used in the EPDM extension process examples, characterization of the mixture and the products are reported in the following Tables 3-5.
M-12, as below discussed, could not provide an acceptable mixture with elastomer and therefore could not be processed and tested.

### General remarks

All the processing oils according to the invention demonstrate good or very good performances when added to the corresponding elastomer to be extended and treated with the usual process conditions; *i.e.* the extension oil was completely absorbed by the polymer mass and no exudate appeared on the surface of the final product. In other words, the properties of the elastomer extended with a processing oil of the invention are comparable or better than the properties of the same elastomer extended with a known mineral processing oil such as M-11; the relevant data are reported in Table 3, Table 4 and Table 5.

Satisfying results were also obtained in terms of no release of unpleasant odour and overall colour shade and uniformity in the mass. In particular, when the mixtures from M-4 to M-7 were employed to mould white shoe soles using SBS, the products were confirmed to be of a good quality and such that they did not give rise to yellowing of the treated elastomer over time and after UV exposition. The difference in purity between M-4 and M-6 and between M-5 and M-7 did not affect the final good results. On the contrary, M-12 did not meet the necessary requirements for its use as extending oil. A particular unfavourable result was obtained when the mixture was used with EPDM due to the incompatibility between the processing oil and the polymer, which was unable to absorb the additive, leading to an unworkable and uneven combination of oil and elastomer.

Indeed, the processing oils of the invention, *i.e.*, the saturated polyol esters alone or in admixture with small amount of refined mineral oils, demonstrate to be highly reliable, also in comparison with other "green" alternatives, when employed for the extension of different types of rubber, production of polymers, production and processing of natural and synthetic rubbers, production of plastics and resins, including adhesives and they can be considered full alternatives to the commonly employed refined mineral oils.

### EPDM extension: process and final products characterization

Compounding processes were performed using EPDM, extended with a well-known mineral oil as processing oil (M-11) or an additive of the present invention, namely M-1, M-2 or M-3.

The ratio between the EPDM and the processing oil (M-x) is 80:20, respectively, and the masterbatch preparation was made in accordance with the specification method ASTM D3568 Form. 1, as per Table 3.

**Table 3: tested polymer formulations F-x (values are expressed as phr (per hundred rubber), i.e., parts of component added with respect to 100 parts of elastomer)**

| **Component** | **F-11** (phr) | **F-1** (phr) | **F-2** (phr) | **F-3** (phr) |
|---|---|---|---|---|
| EPDM | 100.00 | 100.00 | 100.00 | 100.00 |
| Zn oxide | 5.00 | 5.00 | 5.00 | 5.00 |
| stearic acid | 1.00 | 1.00 | 1.00 | 1.00 |
| carbon black N330 | 80.00 | 80.00 | 80.00 | 80.00 |
| M-11 | 50.00 | | | |
| M-1 | | 50.00 | | |
| M-2 | | | 50.00 | |
| M-3 | | | | 50.00 |
| tetramethylthiuram disulphide (TMTD) | 1.00 | 1.00 | 1.00 | 1.00 |
| mercaptobenzothiazole (MBT) | 0.50 | 0.50 | 0.50 | 0.50 |
| sulphur | 1.50 | 1.50 | 1.50 | 1.50 |
| Total | 239.00 | 239.00 | 239.00 | 239.00 |

The preparation method and process parameters of the polymer formulations, or masterbatches, are reported in Table 4 (Internal mixer: 1,200 cubic centimetre, 77 r.p.m., ASTM D3568 Form. 1).

**Table 4: Polymer masterbatch production**

| **Masterbatch preparation** | **F-11** | **F-1** | **F-2** | **F-3** |
|---|---|---|---|---|
| fill factor (theoretical) (%) | 80 | 80 | 80 | 80 |
| batch factor (%) | 4.6 | 4.6 | 4.6 | 4.6 |
| introduction EPDM - ZnO - stearic acid - carbon black - M-x (minutes: seconds) | 0:00-3:00 | 0:00-3:00 | 0:00-3:00 | 0:00-3:00 |
| cleaning (minutes:seconds) | 3:00-3:30 | 3:00-3:30 | 3:00-3:30 | 3:00-3:30 |
| mix (minutes: seconds) | 3:30-5:00 | 3:30-5:00 | 3:30-5:00 | 3:30-5:00 |
| dump (minutes: seconds) | 5:00 | 5:00 | 5:00 | 5:00 |
| dump temperature (°C) | 128 | 100 | 101 | 108 |

| **Masterbatch acceleration** | **F-11** | **F-1** | **F-2** | **F-3** |
|---|---|---|---|---|
| introduction previous masterbatch | 0:00-1:00 | 0:00-1:00 | 0:00-1:00 | 0:00-1:00 |
| introduction TMTD - MBT - sulphur | 1:00-2:00 | 1:00-2:00 | 1:00-2:00 | 1:00-2:00 |
| mix | 2:00-9:00 | 2:00-9:00 | 2:00-9:00 | 2:00-9:00 |
| dump (minutes: seconds) | 9:00 | 9:00 | 9:00 | 9:00 |
| dump temperature (°C) | 130 | 106 | 105 | 116 |

It is important to note that, in Table 4, the dump temperatures of the formulations F-1, F-2 and F-3, in the case both of the masterbatch preparation and acceleration, are lower with respect to the one used for the formulation F-1 1. This aspect, being related to the friction of the formulation, indicates a favourable feature of the masterbatches prepared according to the present invention with respect to the one of the prior art.

In the following Table 5, results obtained in the process and for the final products of formulations F-x of Table 3 are reported.

As far as the vulcanization process is concerned, the indicated parameters have the following significance, well known to the expert in the field:
ML (minimum torque) is a measure of viscosity of the rubber composite and is reported in pounds per inch;
MH (maximum torque) is a measure of the stock modulus of the rubber composite and is reported in pounds per inch;
ts1 represents the cross-linking speed of a compound; is the treatment time at the test temperature for the torque value to increase by 1 point with respect to the minimum value, the measuring unit is minutes.cents (hundredths);
t 50 (or 90, or 95) represents the time in order to obtain a certain degree of vulcanization, *i.e.* the minimum time to have a degree of vulcanization of 50% (or 90%, or 95%) of the total vulcanization. In other words, it is the treatment time at the test temperature necessary to reach a torque value equal to 50% (or 90%, or 95%) of the maximum value. The measuring unit is minutes.cents (hundredths).

**Table 5: Formulations F-x: physical-mechanical characterization**

| **Test** | **ISO method** | **F-11** | **F-1** | **F-2** | **F-3** |
|---|---|---|---|---|---|
| *before vulcanization* | | | | | |
| Mooney Viscosity, Mooney Large | 289-1:2015 | 34.4 | 32 | 31.8 | 32.3 |

| *vulcanization process (rotorless volcanograph:* ±*0,5*° *100 cycles*/*min 1,7 Hz)* | | | | | |
|---|---|---|---|---|---|
| temperature (°C) | 6502:2018 | 160 | 160 | 160 | 160 |
| time (minutes) | | 60 | 30 | 30 | 30 |
| ML (lb-in) | | 1.26 | 1.15 | 1.15 | 1.16 |
| MH (lb-in) | | 12.60 | 12.73 | 12.37 | 12.05 |
| ts1 (minutes.hundredths) | | 1.14 | 1.14 | 1.16 | 1.02 |
| t 50 (minutes.hundredths) | | 2.56 | 2.95 | 2.78 | 2.67 |
| t 90 (minutes.hundredths) | | 10.47 | 9.48 | 9.12 | 9.82 |
| t 95 (minutes.hundredths) | | - | 12.65 | 12.51 | 13.40 |
| vulcanization: plaque 2 mm (°C; minutes) | 2393:2014 | 160; 20 | 160; 20 | 160; 20 | 160; 20 |

| *after vulcanization* | | | | | |
|---|---|---|---|---|---|
| Hardness Shore A (ShA³) | 48-4:2019 | 63 | 63.2 | 63.9 | 63.1 |
| Ultimate tensile strength (MPa) | 37:2017 | 10.6 | 16.6 | 17.0 | 17.4 |
| Fracture strain (%) | | 294 | 372 | 388 | 382 |
| Tear strength (90° without incision; N/mm) | 34-1:2015 | 42.9 | 46.6 | 47.1 | 45.5 |
| Density (g/cm³) | 2781:2018 | 1.0792 | 1.096 | 1.096 | 1.097 |

From the results reported in Table 5 it can be seen that the polymer formulations prepared using the compound and/or the mixture of the present invention give rise to extended elastomers and products with comparable characteristics with respect to the refined mineral oil currently used in the art (formulation F-11).

Surprisingly, also some improvement can be highlighted by comparing the features, during processing and in the final product, of the state-of-the-art formulation (F-1 1) and the ones according to the present invention (F-1, F-2 and F-3). In particular: the time of the vulcanization process was reduced to 30 minutes for the F-1, F-2 and F-3 samples, with respect to the 60 minutes of F-11. Moreover, F-11 registered Mooney Viscosity before vulcanization is significantly higher with respect to the formulations of the present invention, indicating a poorer fluency of the corresponding composition. A reduction in the t 90 values of the current formulations (F-1, F-2 and F-3), with respect to F-11, was also measured, indicating a shorter vulcanization time for the formulations according to the present invention.

Finally, also the results of the tear strength and fracture strain tests show a great improvement for the formulations according to the present invention with respect to F-11.

Overall, the polymer masterbatches of the present invention demonstrate not only to be able to behave in a comparable manner with respect to the one prepared with the commonly used, state-of-the-art, processing oils, but, even more surprisingly, they show improved characteristics both during processing and in the final products.

## Claims

1. A processing oil for elastomer compounding comprising at least a saturated polyol ester compound and at least one refined mineral oil component, the ratio ester/mineral oil (weight/weight) being within a range of 100:0 to 70:30, the values 100:0 and 70:30 being excluded.

2. The processing oil according to claim 1, wherein said refined mineral oil is selected from:
- petroleum distillates, such as: hydrotreated or solvent de-waxed or refined heavy paraffinic; hydrotreated heavy naphthenic; hydrotreated middle; hydrotreated light paraffinic; hydrotreated light naphthenic; solvent dewaxed or refined light paraffinic;
- residual oils from petroleum, such as hydrotreated and solvent refined;
- petroleum residues solvent-dewaxed;
- lubricating oils from petroleum;
- white mineral oil from petroleum;
- hydrocarbons C₁₈-C₂₄ iso-alkanes <2% aromatics;
or mixtures thereof.

3. The processing oil according to claim 1 or 2, wherein said refined mineral oil component is or comprises petroleum distillate heavy paraffinic CAS: 64742-54-7.

4. The processing oil according to any previous claim wherein said ester component is or comprises at least one ester substance as obtainable from the reaction of at least one alcohol selected from linear or branched polyols C₂-C₆, with at least one acid, selected from linear or branched, monocarboxylic C₄-C₂₀ acids, preferably C₈-C₂₀ acids, or derivatives thereof.

5. The processing oil according to any previous claim, wherein said saturated polyol ester compound is the product of the reaction of:
an alcohol selected from: neopentylglycol (CAS 126-30-7), trimethylolpropane (CAS 77-99-6), and pentaerythrityl alcohol (CAS 115-77-5); and
an acid or acid derivative selected from: caprylic acid; pelargonic acid; capric acid; caprylic/capric acid (mixture of C₈-C₁₀ fatty acids); lauric acid; palmitic acid; stearic acid and isostearic acid.

6. The processing oil according to any previous claim wherein the ester component is or comprises pentaerythrityl tetraisostearate (PTIS, CAS: 62125-22-8).

7. The processing oil according to any previous claim wherein the ester component is or comprises Fatty acids, C8-10, esters with trimethylolpropane (TMP C8C10, CAS 91050-89-4).

8. The processing oil according to any previous claim wherein the saturated polyol ester is the only component.

9. The processing oil according to claims 1-7 wherein the ratio by weight ester:refined mineral oil is in the range from 95:5 to 80:20 respectively, preferably in the range of 90:10 to 80:20.

10. The processing oil of claim 9 wherein the mineral oil is heavy paraffinic (CAS: 64742-54-7) and the ester component is pentaerythrityl tetraisostearate (CAS: 62125-22-8).

11. Use of at least one saturated polyol ester compound, optionally in admixture with at least one refined mineral oil component, wherein the ratio ester/mineral oil (weight/weight) being within a range of 100:0 to 70:30, the value 70:30 being excluded, as processing oil for elastomer compounding.

12. The use according to claim 11 **characterized in that** the elastomer is selected from Ethylene/Propylene Rubbers, like Ethylene/Propylene Copolymers (EPR), Ethylene/Propylene/Diene Monomer (EPDM), Styrene/Ethylene/Butadiene/Styrene (SEBS), Styrene /Butadiene/Styrene (SBS), and others Saturated Styrenic Block Copolymer (SBC), Polyvinyl Chloride (PVC), Nitrile Rubber (NBR), Polybutadiene (BR), Polyisoprene (IR), Styrene-Butadiene (SBR).

13. A process of production of elastomers, comprising the step of mixing said elastomers with a processing oil comprising, or alternatively consisting, of at least one saturated polyol ester compound, optionally, in admixture with at least one refined mineral oil component, wherein the ratio ester/mineral oil (weight/weight) being within a range of 100:0 to 70:30, the value 70:30 being excluded.

14. The process of claim 13, wherein said elastomer is EPDM.

15. The process of claim 13 or 14, wherein said processing oil is according to anyone of the claims 1-10.

16. The process of anyone of the claims 13-15, wherein said saturated polyol ester is selected from pentaerythrityl tetraisostearate (CAS: 62125-22-8), trimethylolpropane (CAS 91050-89-4), or a mixture thereof.

17. An elastomer composition comprising, or alternatively consisting, of at least one elastomer and at least one processing oil wherein said processing oil comprises, or alternatively consists, of at least one saturated polyol ester compound, optionally in admixture with at least one refined mineral oil component, wherein the ratio ester/mineral oil (weight/weight) being within a range of 100:0 to 70:30, the value 70:30 being excluded.
